# EUROPEAN PATENT APPLICATION

(11) **EP 4 660 168 A1**
(43) Date of publication of application: **10.12.2025**
(21) Application number: 24750425.1
(22) Date of filing: 02.02.2024
(51) Int. Cl.: C03C 27/12, B32B 17/10, B32B 27/00

(54) **IMAGE-CARRYING LAMINATE, METHOD FOR MANUFACTURING SAME, INTERMEDIATE FILM FOR LAMINATED GLASS, AND LAMINATED GLASS**

(30) Priority: 02.02.2023 JP 2023014891
(71) Applicant: Sekisui Chemical Co., Ltd., Osaka-shi, Osaka 530-8565 (JP)
(72) Inventor: NAKAJIMA, Daisuke, 6041LE Roermond (NL); IZU, Yasuyuki, Mishima-gun, Osaka 618-0021 (JP)
(74) Representative: Ter Meer Steinmeister & Partner
(86) International application number: PCT/JP2024/003590
(87) International publication number: WO 2024/162476

(57) **Abstract**

The image-carrying laminate is an image-carrying laminate 10A for carrying an image, including an image carrier 15, a first resin layer 11, and a transfer prevention member 20, the transfer prevention member 20 including a first transfer prevention layer 21 that is positioned between the image carrier 15 and the first resin layer 11 and that prevents materials constituting the image carrier 15 and the first resin layer 11 from transferring therebetween.

## Description

### Technical Field

The present invention relates to an image-carrying laminate for carrying an image, an interlayer film including an image-carrying laminate for laminated glass, and laminated glass.

### Background Art

Laminated glass is less likely to cause the scattering of broken glass pieces even when being broken by external impact, thus being safety, and hence widely used for glass for various transports including automobiles, train cars, aircrafts, and ships, and glass for buildings and the like. Widely known as laminated glass is a product obtained by disposing an interlayer film for laminated glass, the interlayer film containing a resin component such as polyvinyl acetal resin and ethylene-vinyl acetate copolymer resin, between a pair of glass sheets and integrating the resultant.

The market is increasingly demanding more diverse designs for glass components such as laminated glass sheets in recent years. In automotive applications, for example, there have been appearing needs and concepts to apply designs to glass sites to fit with body design or body color. Also in construction applications, needs for decorative glass for exteriors or interiors have been continuously generated.

It has been common practice to provide a light-emitting layer or a colored layer or printed layer in an interlayer film in order to impart higher design aesthetics to glass components such as laminated glass sheets. For example, as described in PTL1, performing decorations by printing on a thermoplastic hard interlayer constituting the interlayer film through inkjet printing is known. For example, PTL2 discloses forming a light-emitting layer on a thermoplastic sheet constituting the interlayer film by screen printing, inkjet printing, flexographic printing, offset printing, or the like.

### Citation List

### Patent Literature

PTL1: International Publication No. WO 2004/011271
PTL2: International Publication No. WO 2009/122094

### Summary of Invention

### Technical Problem

When an image having a given pattern or design is to be formed in the interlayer by printing with ink, however, the ink itself or a dye or the like contained in the ink may migrate from the image formed with the ink to other resin layers through long-term use. The migration of the ink or the dye or the like to other resin layers generates a problem of degradation of the definition and resolution of the printed image.

In view of such circumstances, an object of the present invention is to provide an image-carrying laminate that maintains the definition and resolution of an image formed thereon well without disturbing the image even in long-term use.

### Solution to Problem

The present inventors have diligently examined, and found that the above problem can be solved by providing an image-carrying laminate including an image carrier and a resin layer with a transfer prevention member between the image carrier and the resin layer, wherein the transfer prevention member prevents materials constituting the image carrier and the first resin layer from transferring therebetween, completing the present invention shown below. Specifically, the present invention provides the following [1] to [15].
[1] An image-carrying laminate for carrying an image, including an image carrier, a first resin layer and a transfer prevention member,
   the transfer prevention member including a first transfer prevention layer that is positioned between the image carrier and the first resin layer and that prevents materials constituting the image carrier and the first resin layer from transferring therebetween.
[2] The image-carrying laminate according to [1], wherein the transfer prevention member includes a second transfer prevention layer positioned on a surface of the image carrier which is opposite to a surface where the first transfer prevention layer is provided, and an outer transfer prevention portion positioned outside the image carrier.
[3] The image-carrying laminate according to [2], further including a second resin layer,
   wherein the second transfer prevention layer is positioned between the image carrier and the second resin layer, and
   the first resin layer and the second resin layer are stacked through the transfer prevention member, and the image carrier is enclosed in the transfer prevention member.
[4] The image-carrying laminate according to [2] or [3], further including a second resin layer,
   wherein the second transfer prevention layer is positioned between the image carrier and the second resin layer, and
   the first resin layer and the second resin layer are stacked through the transfer prevention member partially, and other parts thereof are stacked directly.
[5] The image-carrying laminate according to any one of [2] to [4], further including a second resin layer,
   wherein the second transfer prevention layer is positioned between the image carrier and the second resin layer,
   a part of the second resin layer is directly stacked on a part of the first transfer prevention layer.
[6] The image-carrying laminate according to any one of [1] to [5], wherein the image carrier is formed from an ink containing a dye.
[7] The image-carrying laminate according to [6], wherein the dye is a compound containing a terephthalate skeleton.
[8] The image-carrying laminate according to [6] or [7], wherein the transfer prevention member substantially contains no dye.
[9] The image-carrying laminate according to [1] to [8], wherein a total thickness of the transfer prevention member and the image carrier is 1 µm or more and 200 µm or less.
[10] The image-carrying laminate according to any one of [1] to [9], wherein a thickness ratio of the first transfer prevention layer and the image carrier is 1:200 to 200:1.
[11] The image-carrying laminate according to any one of [1] to [10], wherein the transfer prevention member is a cured product of a resin composition containing an acrylate compound.
[12] An interlayer film for laminated glass, including the image-carrying laminate according to any one of [1] to [11].
[13] A laminated glass including the interlayer film for laminated glass according to [12].
[14] A method of producing the image-carrying laminate according to any one of [1] to [11], including forming at least a part of the transfer prevention member, and the image carrier by printing.
[15] The method of producing the image-carrying laminate according to [14], wherein the printing is at least any one of inkjet printing and screen printing.

### Advantageous Effect of Invention

The image-carrying laminate of the present invention can maintain the definition and resolution of an image formed thereon without disturbing the image even in long-term use.

### Brief Description of Drawings

[Fig. 1] Fig. 1 is a schematic cross-sectional view illustrating an image-carrying laminate according to a first embodiment.
[Fig. 2] Fig. 2 is a schematic cross-sectional view illustrating an image-carrying laminate according to a second embodiment.
[Fig. 3] Fig. 3 is a schematic cross-sectional view illustrating an image-carrying laminate according to a third embodiment.
[Fig. 4] Fig. 4 is a schematic cross-sectional view illustrating an image-carrying laminate according to a fourth embodiment.
[Fig. 5] Fig. 5 is a schematic cross-sectional view illustrating an image-carrying laminate according to a fifth embodiment.
[Fig. 6] Fig. 6 is a schematic cross-sectional view illustrating an image-carrying laminate according to a sixth embodiment.

### Description of Embodiments

The following describes the present invention with reference to embodiments.

### <Image-carrying Laminate>

The image-carrying laminate of the present invention is an image-carrying laminate for carrying an image, and includes an image carrier, a resin layer, and a transfer prevention member. In the present invention, as described later, the transfer prevention member is disposed at a specific position and prevents materials constituting the image carrier and the resin layer from transferring therebetween, and as a result materials constituting the image carrier are prevented from migrating to the resin layer and materials constituting the resin layer are prevented from migrating to the image carrier. Accordingly, the definition and resolution of the image carried on the image carrier are maintained well without the image blurred, even in long-term use.

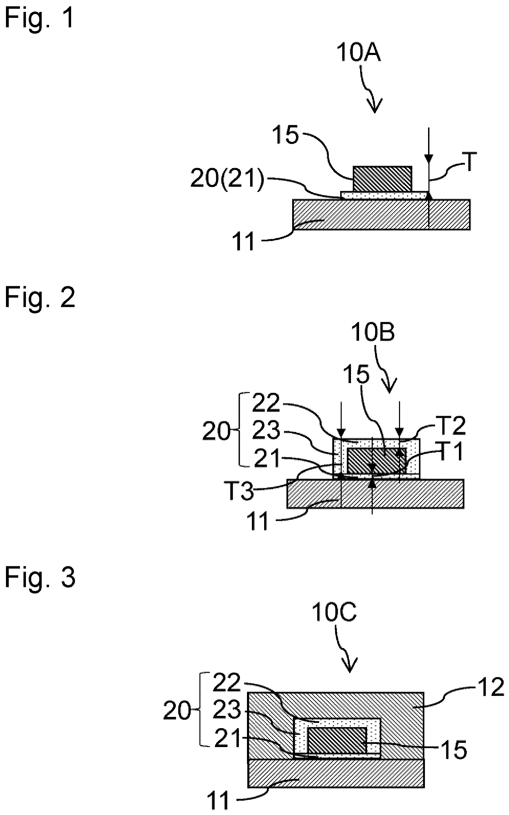

As illustrated in Figs. 1 to 6 shown later, the image-carrying laminate at least needs to include a first resin layer 11 as a resin layer, and preferably includes a second resin layer 12 in addition to the first resin layer 11. In the case that the first and second resin layers 11 and 12 are provided, the image carrier 15 is advantageously provided between the first and second resin layers 11 and 12.

As illustrated in Fig. 1, the transfer prevention member 20 at least includes a first transfer prevention layer 21 positioned between the image carrier 15 and the first resin layer 11, and it is also preferable for the transfer prevention member 20 to further include a second transfer prevention layer 22 and an outer transfer prevention portion 23, as illustrated in Figs. 2 to 6. The second transfer prevention layer 22 is a layer positioned on a surface of the image carrier 15 which is opposite to a surface where the first transfer prevention layer 21 is provided. The second transfer prevention layer 22 is preferably positioned between the image carrier 15 and the second resin layer 12. The outer transfer prevention portion 23 is a transfer prevention member positioned outside the image carrier.

The following describes members constituting the image-carrying laminate of the present invention in detail.

### [Image carrier]

The image carrier is a part to form an image in the image-carrying laminate. The image carrier preferably contains a coloring material. Any of pigments and dyes may be used as the coloring material, but a dye is preferably used. A dye contained in the image carrier is likely to cause the deterioration of the definition and resolution of the image through the migration of the dye to another layer such as the resin layer; however, in the present invention, the transfer prevention member provided as described above can effectively inhibit reduction in the definition and resolution of the image.

A known pigment or dye can be used as the coloring material for the image carrier. Coloring matters of blue, yellow, red, green, purple, white, black, and so on can be used as a coloring agent.

The coloring material may be a material that undergoes coloration through selective absorption of visible rays, but is not limited to such a coloring material, and use of a luminescent material that emits visible light on being irradiated with excitation light, what is called a fluorescent material, is also preferred. The fluorescent material (luminescent material) may be also a material that emits what is called phosphorescence on being irradiated with excitation light.

The maximum emission wavelength of the excitation light (maximum excitation wavelength) is not limited, and preferably 420 nm or less, more preferably 410 nm or less, and further preferably 408 nm or less. The maximum excitation wavelength is preferably 300 nm or more, more preferably 350 nm or more, and further preferably 380 nm or more. Setting the maximum emission wavelength of the excitation light to a value equal to or more than the lower limit value and equal to or less than the upper limit value allows the luminescent material to efficiently emit visible light as a result of the excitation light.

Luminescent materials applicable to the light-emitting layer include lanthanoid complexes, luminescent materials having terephthalate structure, luminescent materials containing a naphthalimide skeleton, luminescent materials containing a coumarin skeleton, and luminescent materials containing a quinoline skeleton. One luminescent material alone or a combination of two or more luminescent materials may be used. Combining a plurality of luminescent materials having different emission wavelengths enables not only monochromatic images but also images having different colors in combination to be displayed. Among the luminescent materials shown above, lanthanoid complexes and luminescent materials having terephthalate structure are preferred, and luminescent materials having terephthalate structure are more preferred.

Compounds having terephthalate structure are compounds that are used as what are called dyes, and generally likely to migrate to another layer such as the resin layer; in the present invention, however, the transfer prevention layer included as described above can properly prevent coloring materials in the image carrier from migrating to the resin layer even if a compound containing a terephthalate skeleton is used as a coloring material. Compounds containing a terephthalate skeleton are typically colorless, and can make the image carrier colorless and transparent unless the image carrier is irradiated with excitation light.

One coloring material alone or a combination of two or more coloring materials may be used in the image carrier.

Compounds containing a terephthalate skeleton include compounds having diterephthalate structure, such as a compound having a structure represented by a formula (1) shown below and a compound having a structure represented by a formula (2) shown below. One of these alone or two or more thereof may be used.

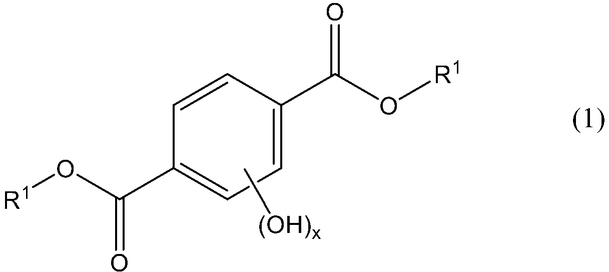

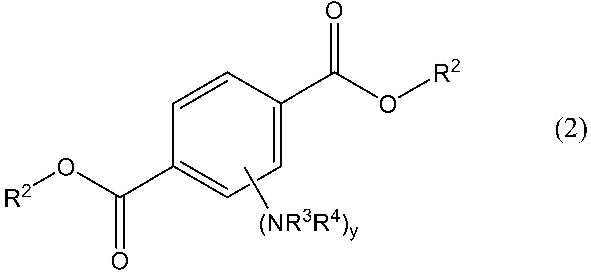

In the formula (1), R¹ represents an organic group, and x is 1, 2, 3, or 4.

To enhance the transparency of the image carrier, X is preferably 1 or 2, the benzene ring more preferably has a hydroxy group at position 2 or position 5 of the benzene ring, and the benzene ring further preferably has hydroxy groups at positions 2 and 5 of the benzene ring.

The organic group for R¹ is preferably a hydrocarbon group, more preferably a hydrocarbon group having one to ten carbon atoms, further preferably a hydrocarbon group having one to five carbon atoms, and particularly preferably a hydrocarbon group having one to three carbon atoms. With ten or less carbon atoms, the hydrocarbon group allows the fluorescent material containing a terephthalate skeleton to be dispersed or dissolved in ink with ease. The hydrocarbon group is preferably an alkyl group. The two groups of R¹ in the formula (1) may be the same or different.

Examples of the compound having the structure represented by the formula (1) include diethyl-2,5-dihydroxyterephthalate and dimethyl-2,5-dihydroxyterephthalate. Among them, diethyl-2,5-dihydroxylterephthalate ("diethyl 2,5-dihydroxyterephthalate" manufactured by Sigma-Aldrich Co. LLC) is preferred as the compound having the structure represented by the general formula (1).

In the formula (2), R² represents an organic group, R³ and R⁴ each represent a hydrogen atom or an organic group, and y is 1, 2, 3, or 4.

The organic group for R² is preferably a hydrocarbon group, more preferably a hydrocarbon group having one to ten carbon atoms, further preferably a hydrocarbon group having one to five carbon atoms, and particularly preferably a hydrocarbon group having one to three carbon atoms. With carbon atoms in a number equal to or less than the upper limit, the hydrocarbon group allows the fluorescent material containing a terephthalate skeleton to be dispersed or dissolved in ink with ease. The hydrocarbon group is preferably an alkyl group. The two groups of R¹ in the formula (2) may be the same or different.

NR³R⁴ in the general formula (2) is an amino group. Preferably, R³ and R⁴ are each independently a hydrocarbon group having one to ten carbon atoms or a hydrogen atom. The hydrocarbon group more preferably has one to five carbon atoms, and is further preferably a hydrocarbon group having one to three carbon atoms. The hydrocarbon group for each of R³ and R⁴ is preferably an alkyl group. R³ and R⁴ may bond to each other to form a ring. The total number of carbon atoms of R³ and R⁴ forming a ring is preferably two to six, and more preferably two to five. Examples of the ring include azetidine.

In the compound having the structure represented by the general formula (2), y is preferably 2. In the case that two or more groups of NR³R⁴ are present in one molecule in the formula (2), the two or more groups of NR³R⁴ may be the same or different.

Preferable examples of the compound having the structure represented by the general formula (2) include diethyl-2,5-diaminoterephthalate (e.g., manufactured by Sigma Aldrich Co. LLC), dimethyl-2,5-bis(dimethylamino)terephthalate, and diethyl-2,5-bis(azetidin-1-yl)terephthalate.

The image carrier is preferably formed from an ink containing a coloring material, and more preferably formed from an ink containing a dye, especially. The ink may be an aqueous ink, in which water is used as the solvent, or a solvent ink, in which an organic solvent is used as the solvent, or a solvent-free ink. It is desirable for the ink to contain a binder resin, and in this case coloring materials in the image carrier are properly held by the binder resin contained therein. A known resin that is used for inks can be used as the binder resin, and the binder resin may be a thermoplastic resin or a curable resin such as an active energy ray-curable resin and a thermosetting resin, and is preferably an active energy ray-curable resin among them, in particular, an ultraviolet-curable resin. The ink can serve as an ultraviolet-curable ink described later through the use of an ultraviolet-curable resin.

The ink may be an ink that dries to solidify through volatilization of the solvent, or a curable ink. It is desired for the curable ink to cure through heating or irradiation with an active energy ray. Examples of the active energy ray can include visible light, an ultraviolet ray, an infrared ray, an X-ray, an α-ray, a β-ray, and a γ-ray. It is desired that the curable ink contain a binder resin, and that the binder resin be a curable resin. The ink is preferably an active energy ray-curable ink among those described above, and more preferably an ultraviolet-curable ink, in particular.

In the case that the ink is an ultraviolet-curable ink, the ink preferably contains a polymerizable compound, which can cure by an active energy ray, as a curable resin being a curable binder resin component. A known substance that is used as an ultraviolet-curable ink can be used as the polymerizable compound, and an acrylate-based compound is preferred as the polymerizable compound.

The acrylate-based compound is a compound having a (meth)acryloyl group, and may be a monofunctional acrylate compound, which has one (meth)acryloyl group; however, containing a polyfunctional acrylate compound, which has at least two or more (meth)acryloyl groups, is preferred. Use of a polyfunctional acrylate compound allows the image carrier to properly cure with ease.

The polyfunctional acrylate compound may be a diacrylate compound, which has two (meth)acryloyl groups, or a polyfunctional acrylate compound having three or more (meth)acryloyl groups; however, containing a polyfunctional acrylate compound having three or more (meth)acryloyl groups as the acrylate-based compound to be contained in the ink is more preferred. Use of a polyfunctional acrylate compound having three or more (meth)acryloyl groups allows the image carrier to be of a crosslinked product having three-dimensional network structure, giving higher mechanical strength and making materials constituting the image carrier less likely to transfer to the resin layer and others.

The ultraviolet-curable ink can appropriately contain known components that are used for inks in addition to coloring materials and the binder resin, for example, components contained in conventional ultraviolet-curable inks such as a sensitizer, a dispersing agent, a leveling agent, a defoamer, a surface conditioner, and a photopolymerization initiator. The ultraviolet-curable ink may be solvent-free, and may appropriately contain an organic solvent or the like, as necessary.

The image carrier is preferably a printed layer formed by printing, more preferably formed by printing on the first transfer prevention layer, and further preferably formed by printing on the first transfer prevention layer formed on the first resin layer, in particular.

The image carrier may be formed on the whole surface of the image-carrying laminate through what is called solid printing, but is preferably formed by printing to have a given image shape such as a design such as a painting, patterns, and icons, characters, or a combination of them in a partial region of the image-carrying laminate. In the case that the image carrier is formed by printing to have a given image shape, reduction in the resolution or definition of the image results in significant reduction in the image quality, but the transfer prevention member provided as described above can prevent reduction in the resolution and definition of the image, and hence reduction in the image quality can be properly inhibited.

The thickness of the image carrier 15 (see Fig. 1), T, is not limited, and preferably 0.5 µm or more and 70 µm or less, more preferably 1 µm or more and 50 µm or less, and further preferably 5 µm or more and 30 µm or less. With a thickness equal to or more than the lower limit value, the image carrier can properly display an image. With a thickness equal to or less than the upper limit value, the image carrier, which has been formed only in a partial region of the image-carrying laminate, can prevent generation of large unevenness in the image-carrying laminate. In addition, the image-carrying laminate can be prevented from having a thickness larger than necessary.

### [Resin layer]

As described above, the image-carrying laminate of the present invention includes at least one resin layer (first resin layer), and preferably includes at least two resin layers (first and second resin layers). Inclusion of two resin layers allows the image carrier to be disposed between a pair of resin layers, and hence allows the image-carrying laminate to properly adhere to a counterpart member on each surface of the image-carrying laminate via the corresponding resin layer. Accordingly, the image-carrying laminate can be advantageously used as an interlayer film for laminated glass.

Each resin layer is advantageously used as a substrate layer for holding the image carrier described above. In addition, each resin layer advantageously serves as an adhesion layer for adhering the image-carrying laminate to a counterpart member such as a glass member. Accordingly, the first resin layer is preferably disposed on one surface of the image-carrying laminate. In the case that a second resin layer is provided, the second resin layer is preferably disposed on the other surface of the image-carrying laminate (a surface which is opposite to the one surface). Disposed on the surfaces of the image-carrying laminate, the resin layers can be each properly used as an adhesion layer for adhering to a counterpart member.

The resin layer (first resin layer, or first and second resin layers) is a layer containing a resin, and the resin in each resin layer is preferably a thermoplastic resin. Containing a thermoplastic resin, the resin layer reliably serves as an adhesion layer, and good adhesion to glass sheets (glass members) is achieved.

Examples of the thermoplastic resin in each resin layer include, but are not limited to, polyvinyl acetal resin, ethylene-vinyl acetate copolymer resin, ionomer resin, polyurethane resin, thermoplastic elastomer, acrylic resin, acryl-vinyl acetate copolymer resin, polyvinyl alcohol resin, polyolefin resin, polyvinyl acetate resin, and polystyrene resin. Use of such resin makes it easier to ensure adhesion to glass sheets.

One thermoplastic resin alone or a combination of two or more thermoplastic resins may be used for each resin layer in the present invention.

Among the substances shown above, at least one selected from the group consisting of polyvinyl acetal resin and ethylene-vinyl acetate copolymer resin is preferred, and polyvinyl acetal resin is more preferred because it exerts superior adhesion to glass particularly when used in combination with a plasticizer.

In the case that a plurality of resin layers is included, an appropriate resin can be selected from the group consisting of the resins listed above for the resin to constitute each resin layer. The resins constituting the resin layers may be different resins, but are preferably the same as each other.

In the case that first and second resin layers are provided, each of the resins to be used for the first and second resin layers is preferably at least one selected from the group consisting of polyvinyl acetal resin and ethylene-vinyl acetate copolymer resin, and more preferably polyvinyl acetal resin.

### (Polyvinyl acetal resin)

Any polyvinyl acetal resin that is obtained by acetalization of a polyvinyl alcohol (PVA) with an aldehyde may be used without limitation.

The aldehyde is not limited, and an aldehyde having one to ten carbon atoms is suitably used in typical cases. Examples of the aldehyde having one to ten carbon atoms include, but are not limited to, n-butylaldehyde, isobutylaldehyde, n-valeraldehyde, 2-ethylbutylaldehyde, n-hexylaldehyde, n-octylaldehyde, n-nonylaldehyde, n-decylaldehyde, formaldehyde, acetaldehyde, and benzaldehyde. One of these aldehydes alone or a combination of two or more thereof may be used.

Among the substances shown above, n-butylaldehyde, n-hexylaldehyde, and n-valeraldehyde are preferred, and n-butylaldehyde is more preferred. Accordingly, polyvinyl butyral resin is suitable as the polyvinyl acetal resin.

The polyvinyl alcohol (PVA) is obtained by saponifying polyvinyl ester such as polyvinyl acetate. The degree of saponification of the polyvinyl alcohol is typically 70 to 99.9 mol%. One polyvinyl acetal resin alone or a combination of two or more polyvinyl acetal resins may be used.

The average degree of polymerization of the PVA is preferably 200 or more, more preferably 500 or more, further preferably 1000 or more, and furthermore preferably 1500 or more. The average degree of polymerization being equal to or more than the lower limit results in higher penetration resistance in laminated glass. The average degree of polymerization of the PVA is preferably 5000 or less, more preferably 4000 or less, further preferably 3500 or less, and furthermore preferably 2500 or less.

The average degree of polymerization of the polyvinyl alcohol can be determined by a method in accordance with JIS K 6726 "Testing methods for polyvinyl alcohol".

The hydroxyl content of the polyvinyl acetal resin is preferably 15 mol% or more, and preferably 38 mol% or less. The hydroxyl content being 15 mol% or more tends to give good adhesion, and makes it easier to impart good penetration resistance or the like to laminated glass. The hydroxyl content being 38 mol% or less prevents laminated glass from, for example, being excessively hard. The hydroxyl content is more preferably 20 mol% or more, and further preferably 25 mol% or more, for example, for adhesion to glass sheets. The hydroxyl content is more preferably 35% or less, and further preferably 33 mol% or less.

Also in using polyvinyl butyral resin as the polyvinyl acetal resin, the hydroxyl content is 15 mol% or more, and preferably 38 mol% or less, more preferably 20 mol% or more, and further preferably 25 mol% or more, and more preferably 35% mol or less, and further preferably 33 mol% or less, for the same reason.

The hydroxyl content of the polyvinyl acetal resin is a value of mole fraction in percent determined by dividing the amount of ethylene groups to which a hydroxy group is bound by the total amount of ethylene groups in the main chain. The amount of ethylene groups to which a hydroxy group is bound can be measured, for example, in accordance with JIS K 6728 "Testing methods for polyvinyl butyral".

The degree of acetalization of the polyvinyl acetal resin is preferably 47 mol% or more, and preferably 85 mol% or less. The degree of acetalization is more preferably 55 mol% or more, and further preferably 60 mol% or more, and more preferably 80 mol% or less, and further preferably 75 mol% or less.

In the case that the acetal group is a butyral group and the polyvinyl acetal resin (A) is polyvinyl butyral resin, the degree of acetalization indicates the degree of butyralization.

The degree of acetalization is a value of mole fraction in percentage determined by dividing a value obtained by subtracting the amount of ethylene groups to which a hydroxy group is bound and the amount of ethylene groups to which an acetyl group is bound from the total amount of ethylene groups in the main chain by the total amount of ethylene groups in the main chain. The degree of acetalization (degree of butyralization) can be calculated from a result of measurement, for example, by a method in accordance with JIS K 6728 "Testing methods for polyvinyl butyral".

The degree of acetylation of the polyvinyl acetal resin is preferably 30 mol% or less, more preferably 20 mol% or less, further preferably 10 mol% or less, and furthermore preferably 2 mol% or less. The degree of acetylation being equal to or less than the upper limit imparts high moisture resistance to the image-carrying laminate and laminated glass. The degree of acetylation is preferably 0.01 mol% or more, and more preferably 0.1 mol% or more, but is not limited thereto.

The degree of acetylation is a value of mole fraction in percentage determined by dividing the amount of ethylene groups to which an acetyl group is bound by the total amount of ethylene groups in the main chain. The amount of ethylene groups to which an acetyl group is bound can be measured, for example, in accordance with JIS K 6728 "Testing methods for polyvinyl butyral".

### (Ethylene-vinyl acetate copolymer resin)

The ethylene-vinyl acetate copolymer resin may be non-crosslinked ethylene-vinyl acetate copolymer resin or high-temperature-crosslinked ethylene-vinyl acetate copolymer resin. In addition, ethylene-vinyl acetate modified resin such as a saponification product of ethylene-vinyl acetate copolymer and a hydrolysate of ethylene-vinyl acetate can be used as the ethylene-vinyl acetate copolymer resin.

The vinyl acetate content of the ethylene-vinyl acetate copolymer resin as measured in accordance with JIS K 6730 "Testing methods for ethylene/vinyl acetate resin" or JIS K 6924-2: 1997 is preferably 10 to 50% by mass, and more preferably 20 to 40% by mass. The vinyl acetate content being equal to or more than the lower limit value gives high adhesion to glass, and makes it easier to impart good penetration resistance to laminated glass. The vinyl acetate content being equal to or less than the upper limit value imparts high rupture strength to the image-carrying laminate, resulting in good impact resistance in laminated glass.

### (Plasticizer)

If containing a thermoplastic resin, each resin layer preferably further contains a plasticizer. Specifically, the first resin layer preferably contains a thermoplastic resin and a plasticizer. In the case that a second resin layer is provided, the second resin layer preferably contains a thermoplastic resin and a plasticizer, likewise.

The plasticizer contained in the resin layer makes the resin layer flexible, and as a result makes the image-carrying laminate flexible, likewise. In using the image-carrying laminate for an interlayer film for laminated glass, the plasticizer enhances the flexibility of the laminated glass, as well as the penetration resistance. Moreover, the plasticizer allows exertion of high adhesion to glass sheets.

The plasticizer contained in the resin layer (e.g., first resin layer, or first and second resin layers) allows the migration of materials constituting the image carrier and the resin layer to proceed therebetween with ease, whereas, in the present invention, the transfer prevention member provided as described above can effectively inhibit the progression of migration of materials constituting the image carrier and the resin layer therebetween. Accordingly, if the resin layer (e.g., first resin layer, or first and second resin layers) contains a plasticizer, the effect of providing the transfer prevention member is more reliably exerted.

Allowing each resin layer to contain a plasticizer is particularly effective in using polyvinyl acetal resin as the thermoplastic resin. Accordingly, the first resin layer more preferably contains polyvinyl acetal resin and a plasticizer. Likewise, the second resin layer more preferably contains polyvinyl acetal resin and a plasticizer.

Examples of the plasticizer include organic ester plasticizers such as monobasic organic acid ester and polybasic organic acid ester, and phosphorus-containing plasticizers such as organophosphate plasticizers and organophosphite plasticizers. Among them, organic ester plasticizers are preferred.

Examples of the organic ester plasticizers include triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, tetraethylene glycol di-2-ethylhexanoate, dibutyl sebacate, dioctyl azelate, dibutylcarbitol adipate, ethylene glycol di-2-ethylbutyrate, 1,3-propylene glycol di-2-ethylbutyrate, 1,4-butylene glycol di-2-ethylbutyrate, 1,2-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicapryate, triethylene glycol di-n-heptanoate, tetraethylene glycol di-n-heptanoate, triethylene glycol di-2-ethylbutyrate, dihexyl adipate, dioctyl adipate, hexylcyclohexyl adipate, diisononyl adipate, heptylnonyl adipate, dibutyl sebacate, oil-modified sebacic alkyd, a mixture of phosphate and adipate, and mixed adipate. Examples of the mixed adipate include an adipate prepared from two or more alcohols selected from the group consisting of alkyl alcohols having four to nine carbon atoms and cyclic alcohols having four to nine carbon atoms.

Among the above plasticizers, triethylene glycol-di-2-ethylhexanoate (3GO) is particularly suitably used.

The plasticizer content of the resin layer (e.g., first resin layer, or first and second resin layers) is not limited, and preferably 10 parts by mass or more and 100 parts by mass or less to 100 parts by mass of the thermoplastic resin. The plasticizer content of 10 parts by mass or more makes the image-carrying laminate moderately flexible. Accordingly, if the image-carrying laminate is used as an interlayer film for laminated glass, the laminated glass has good penetration resistance or the like. The plasticizer content of 100 parts by mass or less prevents the plasticizer from separating from the resin layer. The plasticizer content is more preferably 20 parts by mass or more, further preferably 30 parts by mass or more, and further preferably 35 parts by mass or more, and more preferably 70 parts by mass or less, and further preferably 63 parts by mass or less.

In the resin layer (e.g., first resin layer, or first and second resin layers), the resin or the resin and plasticizer serve as main components, and the total amount of the thermoplastic resin and plasticizer in each resin layer is typically 70% by mass or more and 100% by mass or less, preferably 80% by mass or more and 100% by mass or less, and further preferably 90% by mass or more and 100% by mass or less with respect to the total amount of the resin layer. However, each resin layer typically contains an additive in many cases as described later, and hence the total amount of the thermoplastic resin and plasticizer may be less than 100% by mass.

Each resin layer in the present invention may appropriately contain various additives such as thermal insulators, ultraviolet absorbers, antioxidants, photostabilizers, ultraviolet absorbers, and antioxidants.

The thickness of the resin layer (first resin layer, or first and second resin layers) is not limited, and, for example, 0.05 mm or more and 1 mm or less, preferably 0.1 mm or more and 0.8 mm or less, and further preferably 0.2 mm or more and 0.5 mm or less. The resin layer, having a thickness in the range, can properly support the image carrier without causing the image-carrying laminate to have a thickness larger than necessary, and make it easier to adhere the image-carrying laminate to a counterpart member such as a laminated glass member.

In the case that first and second resin layers are provided, the image carrier described above and the transfer prevention member described later are disposed between the first and second resin layers.

As illustrated in Figs. 3, 5, and 6, the first and second resin layers 11 and 12 are preferably stacked through the transfer prevention member 20, and in this case the image carrier 25 is more preferably enclosed in the transfer prevention member 20. With the configuration in which the first and second resin layers are stacked through the transfer prevention member enclosing the image carrier, materials constituting the image carrier are effectively inhibited from transferring to any of the first and second resin layers.

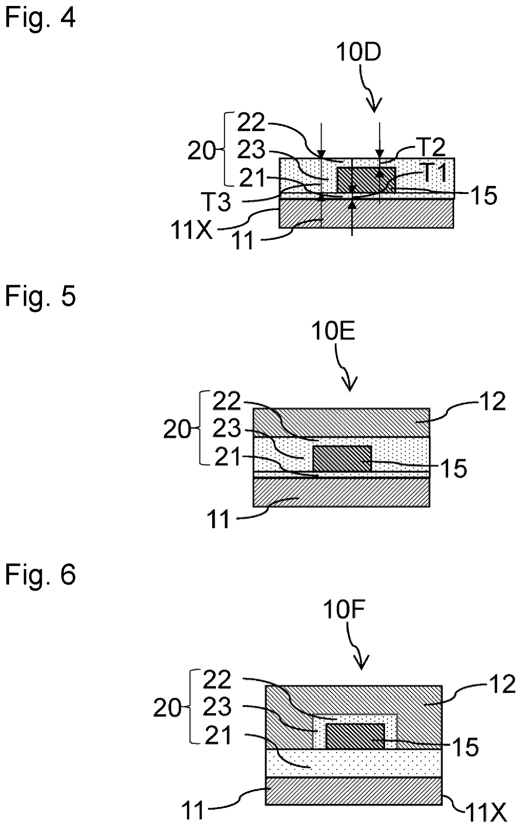

In the case that the first and second resin layers are stacked through the transfer prevention member, the entire of the first and second resin layers 11 and 12 may be stacked through the transfer prevention member 20 as illustrated in Fig. 5.

Alternatively, the first resin layer 11 may be partially stacked through the transfer prevention member 20 and partially stacked directly on the second resin layer 12 as illustrated in Fig. 3. This configuration allows the transfer prevention member to be small-sized, resulting in easy production, and can effectively prevent materials constituting the image carrier from transferring to the first and second resin layers with the small-sized transfer prevention member.

Moreover, in the case that the first and second resin layers are stacked through the transfer prevention member, the second resin layer 12 is typically stacked on the second transfer prevention layer 22 as illustrated in Fig. 3, but a part of the second resin layer 12 may be directly stacked on a part of the first transfer prevention layer 21 as illustrated in Fig. 6. This configuration can be advantageously employed, for example, in the case that a thermoplastic resin is used as the resin in the first transfer prevention layer and the first transfer prevention layer is stacked on the entire of the first resin layer by lamination or the like. If the configuration is employed, only small area is needed for printing, and the production process can be simplified.

### [Transfer prevention member]

As described above, the image-carrying laminate of the present invention includes a transfer prevention member. The transfer prevention member is a member that prevents materials constituting the image carrier from transferring to the resin layer and prevents materials constituting the resin layer from transferring to the image carrier.

The transfer prevention member needs to be formed of components capable of inhibiting the transfer of constituent materials, and is preferably composed of a resin. The resin to be used for the transfer prevention member may be a curable resin such as a thermosetting resin and an active energy ray-curable resin, or a thermoplastic resin, and is preferably a curable resin among them, more preferably an active energy ray-curable resin, especially, and further preferably an ultraviolet-curable resin. Use of a curable resin makes it easier to inhibit the transfer of materials constituting the resin layer and image carrier. Use of an active energy ray-curable resin such as an ultraviolet-curable resin allows the transfer prevention member to be formed with ease, even by printing or the like.

In the case that an ultraviolet-curable resin is used, the transfer prevention member is preferably a cured product of a resin composition containing a polymerizable compound that is capable of curing by ultraviolet rays. The polymerizable compound is preferably an acrylate-based compound. The acrylate-based compound is a compound having a (meth)acryloyl group, and may be a monofunctional acrylate compound, which has one (meth)acryloyl group, and containing a polyfunctional acrylate compound, which has at least two or more (meth)acryloyl groups, is also acceptable. Use of a polyfunctional acrylate compound makes it easier to properly cure the transfer prevention member. It is also preferable to contain, as the polymerizable compound, a hydroxy group-containing acrylate compound such as hydroxyalkyl methacrylate, representative examples of which are 2-hydroxypropyl methacrylate and 2-hydroxyethyl methacrylate.

The polyfunctional acrylate compound may be any of a diacrylate compound, which has two (meth)acryloyl groups, and a polyfunctional acrylate compound having three or more (meth)acryloyl groups, but it is more preferable to contain a polyfunctional acrylate compound having three or more (meth)acryloyl groups as the acrylate-based compound to be contained in the resin composition. Use of a polyfunctional acrylate compound having three or more (meth)acryloyl groups allows the transfer prevention member to be of a crosslinked product having three-dimensional network structure, giving higher mechanical strength, and makes it easier to properly prevent materials constituting the resin layer and the image carrier from transferring therebetween.

In the case that the transfer prevention member is formed of a resin composition containing a polymerizable compound that is capable of curing by ultraviolet rays, the resin composition advantageously contains a photopolymerization initiator, and the resin composition may appropriately contain an antioxidant, a filler, and so on in addition to the photopolymerization initiator. Furthermore, the resin composition may be diluted with an organic solvent or the like.

Examples of the thermoplastic resin to be used for the transfer prevention member include polyester resin and acrylic resin. The acrylic resin is preferably an acrylic polymer containing constituent units derived from hydroxy group-containing (meth)acrylate; specifically, for example, polyhydroxypropyl methacrylate (HPMA resin) and polyhydroxyethyl methacrylate (HEMA resin) are preferred.

The thermoplastic resin is preferably polyethylene terephthalate, polyhydroxypropyl methacrylate, or polyhydroxyethyl methacrylate, and polyethylene terephthalate (PET) is especially preferred. The polyethylene terephthalate may be modified PET; for example, cyclohexanedimethylene-modified PET (PETG) is preferred.

One thermoplastic resin alone or a combination of two or more thermoplastic resins may be used for the transfer prevention member.

In the case that a thermoplastic resin is used as the resin in the transfer prevention member, the transfer prevention member may consist of the resin alone, but an additive may be blended unless the functions are inhibited. Examples of the additive include an antioxidant, a photo stabilizer, a fluorescent brightener, and a crystal-nucleating agent.

As described above for the resin layer, a plasticizer may be blended in the thermoplastic resin to ensure the flexibility, but it is preferable for the transfer prevention member to substantially contain no plasticizer. While plasticizers generally promote the transfer of constituent materials, the transfer prevention member substantially containing no plasticizer more reliably exerts the functions as the transfer prevention member.

The phrase of substantially containing no plasticizer means that a plasticizer in an amount that does not impair the functions of the transfer prevention member may be contained, for example, a plasticizer that has been unintendedly and inevitably mixed may be contained. The plasticizer content of the transfer prevention member needs to be, for example, less than 2 parts by mass, is preferably less than 1 part by mass, further preferably less than 0.5 parts by mass, and most preferably 0 parts by mass to 100 parts by mass of the resin.

It is preferable for the transfer prevention member to substantially contain no dye, and it is more preferable for the transfer prevention member to substantially contain no coloring material. Here, the phrase of substantially containing no dye or coloring material means that a dye or coloring material in an amount that does not color the transfer prevention member may be contained, for example, a dye or coloring material that has been unintendedly and inevitably mixed may be contained. The transfer prevention member substantially containing no dye or coloring material allows the image carrier to have much better definition and resolution.

Accordingly, the dye concentration of the transfer prevention member may be, for example, less than 0.001% by mass or less than 0.0001% by mass, and is preferably 0% by mass. The same suitably applies to the coloring material concentration.

While the manner of forming the transfer prevention member depends on what materials are used to constitute the transfer prevention member and where the materials are disposed, the transfer prevention member may be formed by any of application methods including printing, or by a lamination method.

In the present invention, the transfer prevention member at least includes a first transfer prevention layer. As illustrated in Figs. 1 to 6, the first transfer prevention layer 21 is a layer that is positioned between the image carrier 15 and the first resin layer 11 and that prevents materials constituting the image carrier 15 and the first resin layer 11 from transferring therebetween. Including the first transfer prevention layer, the transfer prevention member prevents materials constituting the image carrier from transferring to the first resin layer and prevents materials constituting the first resin layer from transferring to the image carrier. Accordingly, reduction in the definition and resolution of the image carried on the image carrier can be prevented and the blur of the image can be inhibited, even in long-term use.

The first transfer prevention layer at least needs to be formed on one surface of the first resin layer. The first transfer prevention layer may be provided in the whole region or partially on one surface of the first resin layer. Here, the first transfer prevention layer is advantageously formed at least more largely than the image carrier; the image carrier is advantageously disposed, as virtually viewed in the thickness direction, in a region where the first transfer prevention member is present and inside the outline of the first transfer prevention member. The described configuration of the first transfer prevention layer can effectively inhibit materials constituting the first resin layer and the image carrier from transferring therebetween.

As described above, the image carrier is preferably formed in a given shape to fit with the image; in this case the first transfer prevention layer may be slightly larger in a shape similar to the given shape, but does not need to be similar to the given shape.

The resin constituting the first transfer prevention layer may be a curable resin such as a thermosetting resin and an active energy ray-curable resin or a thermoplastic resin, and is more preferably an active energy ray-curable resin, especially, and further preferably an ultraviolet-curable resin. Details on the thermoplastic resin, ultraviolet-curable resin, and others are as described above.

The first transfer prevention layer is formed, for example, by any of application methods including printing or by a lamination method, and preferably formed by printing in any of the case that the first transfer prevention layer is partially provided on one surface of the first resin layer and the case that the first transfer prevention layer is totally provided on one surface of the first resin layer. In the case that the first transfer prevention layer is partially provided, the first transfer prevention layer is particularly preferably formed by printing.

In the case that the first transfer prevention layer is formed by printing, use of a curable resin is preferred, and use of an ultraviolet-curable resin is more preferred, especially. Accordingly, the first transfer prevention layer is preferably a printed layer as a cured product of a resin composition containing an ultraviolet-curable resin. In this case, the first transfer prevention layer is preferably formed by applying a resin composition onto the first resin layer, drying or the like, as necessary, and curing by irradiating with an ultraviolet ray.

In forming the first transfer prevention layer as a printed layer, it is easier to form the first transfer prevention layer to give a proper size so as to fit with the shape of the image carrier. In addition, easy production is achieved by forming both the image carrier and the first transfer prevention layer as printed layers.

In the case that a thermoplastic resin is used as the resin constituting the first transfer prevention layer, the first transfer prevention layer is preferably formed by a lamination method. More specifically, the first transfer prevention layer may be formed by stacking a thermoplastic resin on the first resin layer through extrusion molding, or formed by processing a thermoplastic resin into a film in advance and stacking the film on the first resin layer through press molding or the like, and another known lamination method may be employed. For the lamination method, a co-extrusion method may be employed in which the first transfer prevention layer is formed together with the first resin layer through extrusion molding.

The lamination method is suitable in forming the first transfer prevention layer on the entire of one surface of the first resin layer. Accordingly, in the case that the resin constituting the first transfer prevention layer is a thermoplastic resin, the first transfer prevention layer is preferably provided on the entire of one surface of the first resin layer.

However, the first transfer prevention layer is not limited to the described configuration, and the first resin layer may be appropriately surface-treated to give a surface-treated part that serves as the first transfer prevention layer. The surface treatment may be any treatment as long as materials constituting the image carrier and the first resin layer is successfully prevented from transferring therebetween better after the treatment than before the treatment, and examples thereof include plasma treatment and ozone treatment.

The thickness of the first transfer prevention layer may be, for example, about 0.5 µm or more and 300 µm or less. With a thickness equal to or more than the lower limit value, the first transfer prevention layer can reliably exert the functions as a transfer prevention layer. By employing a thickness equal to or less than the upper limit value, the image-carrying laminate is successfully prevented from having a thickness larger than necessary.

The thickness of the first transfer prevention layer is preferably 0.5 µm or more and 100 µm or less, more preferably 1 µm or more and 50 µm or less, and further preferably 5 µm or more and 30 µm or less. With a thickness larger than a certain value, the first transfer prevention layer can much more reliably exert the functions as a transfer prevention layer. By employing a thickness equal to or less than the upper limit value, a thickness proper as a printed layer is successfully attained as illustrated in Figs. 1 to 5 described later.

The thickness of the first transfer prevention layer is, for example, the thickness of the first transfer prevention layer 21 in a part where the image carrier 15 is provided, T1, as illustrated in Fig. 2, and can be calculated as an average value such as 10-point mean.

However, in the case that a thermoplastic resin is used as the resin in the first transfer prevention layer and the first transfer prevention layer is stacked on the entire of one surface of the first resin layer as in a sixth embodiment described later (see Fig. 6), the first transfer prevention layer may be relatively thick, and the thickness is preferably 15 µm or more and 300 µm or less, more preferably 20 µm or more and 200 µm or less, and further preferably 30 µm or more and 150 µm or less. With a thickness in that range, the first transfer prevention layer can be formed by a lamination method with ease, and can be suitably applied to a first transfer prevention layer 21 in the sixth embodiment described later (see Fig. 6). With a relatively large thickness as described above, the first transfer prevention layer functions also as a substrate layer, and serve also as a member to support the image carrier together with the first resin layer.

The ratio between the thickness of the first transfer prevention layer, T1, and the thickness of the image carrier, T, (T1:T), is preferably 1:200 to 200:1. The thicknesses satisfying this allow the image carrier to more properly display the image while materials constituting the image carrier and the first resin layer are more properly prevented from transferring therebetween with the first transfer prevention layer. The ratio, (T1:T), is more preferably 1:100 to 100:1, further preferably 1:10 to 10:1, and furthermore preferably 1:3 to 3:1.

In addition to the first transfer prevention layer 21, the transfer prevention member in the present invention preferably further includes a second transfer prevention layer 22 positioned on a surface of the image carrier 15 which is opposite to a surface where the first transfer prevention layer 21 is provided, as illustrated in Figs. 2 to 6.

In the case that the second transfer prevention layer is provided, a second resin layer 12 is preferably also provided as illustrated in Figs. 3, 5, and 6, and the second transfer prevention layer 22 is more preferably a layer positioned between the image carrier 15 and the second resin layer 12. In addition, it is advantageous for the second transfer prevention layer to be a layer that prevents materials constituting the image carrier and the second resin layer from transferring therebetween.

Including the second transfer prevention layer, the transfer prevention member can prevent materials constituting the image carrier from transferring to another layer such as the second resin layer and prevent materials constituting another layer such as the second resin layer from transferring to the image carrier. Accordingly, with the configuration in which the second resin layer is provided in addition to the first resin layer, reduction in the definition and resolution of the image carried on the image carrier can be effectively prevented and the blur of the image can be inhibited, even in long-term use.

It is also preferable for the transfer prevention member to include an outer transfer prevention portion 23 positioned outside the image carrier 15, as illustrated in Figs. 2 to 6. The outer transfer prevention portion is advantageously provided to be in contact with the outer peripheral surface of the image carrier. The outer transfer prevention portion prevents materials constituting the image carrier from transferring from the outer peripheral surface to the exterior and prevents materials constituting the resin layer and others present outside from transferring from the outer peripheral surface to the image carrier, and hence reduction in the resolution and definition of the image can be much more effectively inhibited.

The outer transfer prevention portion is preferably provided over the whole periphery to surround the image carrier. This configuration can more effectively prevent materials constituting the image carrier from transferring from the outside to the exterior.

A resin layer may be disposed further outside the outer transfer prevention portion. In this case, the resin layer on the outside may be the first resin layer or the second resin layer, but is preferably the second resin layer. The resin layer to be disposed outside the outer transfer prevention portion is advantageously disposed to be in contact with the outer peripheral surface of the outer transfer prevention portion. In addition, the resin layer to be disposed outside the outer transfer prevention portion is preferably disposed over the whole periphery to surround the image carrier.

On the image carrier formed on the first transfer prevention layer, the second transfer prevention layer is advantageously further formed. The outer transfer prevention portion is advantageously formed on the first transfer prevention layer to be in close contact with the outer peripheral surface of the image carrier.

The second transfer prevention layer and the outer transfer prevention portion are preferably both formed by any of application methods including printing, and they are advantageously integrally formed to straddle the first transfer prevention layer and the image carrier. In addition, the second transfer prevention layer and the outer transfer prevention portion are preferably simultaneously formed in the same printing process.

The resins constituting the second transfer prevention layer and the outer transfer prevention portion may be each a curable resin such as a thermosetting resin and an active energy ray-curable resin or a thermoplastic resin, but are each preferably a curable resin, and more preferably an ultraviolet-curable resin. Details on the thermoplastic resin, curable resin, and others are as described above.

In addition, each of the second transfer prevention layer and the outer transfer prevention portion is preferably a printed layer as a cured product of a resin composition containing an ultraviolet-curable resin, as with the case of the first transfer prevention layer.

The materials to be used for the first and second transfer prevention layers and the outer transfer prevention portion may be the same or different.

In the present invention, the first and second transfer prevention layers and the outer transfer prevention portion advantageously integrally constitute the transfer prevention member, and preferably with this configuration the image carrier 15 is enclosed in the transfer prevention member 20, for example, as illustrated in Figs. 2 to 6. Enclosure of the image carrier in the transfer prevention member prevents materials constituting the image carrier from leaking to the exterior, and the image on the image carrier tends to have much better resolution and definition.

The thickness of the second transfer prevention layer is preferably 0.5 µm or more and 100 µm or less, more preferably 1 µm or more and 50 µm or less, and further preferably 5 µm or more and 30 µm or less. With a thickness larger than a certain value, the second transfer prevention layer much more reliably exerts the functions as a transfer prevention layer. By employing a thickness equal to or less than the lower limit value, a thickness proper as a printed layer is successfully attained as illustrated in Figs. 2 to 6.

The thickness of the second transfer prevention layer is the thickness of the second transfer prevention layer in a part where the image carrier is provided, T2, as illustrated in Fig. 2, and can be calculated as an average value such as 10-point mean.

The thickness of the outer transfer prevention portion is preferably 0.5 µm or more and 100 µm or less, more preferably 1 µm or more and 50 µm or less, and further preferably 5 µm or more and 30 µm or less. With a thickness larger than a certain value, the outer transfer prevention portion much more reliably exerts the functions as an outer transfer prevention portion. By employing a thickness equal to or less than the lower limit value, a thickness proper as a printed layer is successfully attained as illustrated in Figs. 2 to 6.

The thickness of the outer transfer prevention portion is preferably equal to or larger than the thickness of the image carrier. With such a thickness, the transfer of materials constituting the image carrier in the outer peripheral surface thereof can be properly prevented.

The thickness of the outer transfer prevention layer is the thickness of the outer transfer prevention layer 23 outside a part where the image carrier 15 is provided, T3, as illustrated in Fig. 2. The outer transfer prevention layer is typically formed on the first transfer prevention layer outside the image carrier, and hence the thickness, T3, is a thickness given by subtracting the thickness of the first transfer prevention layer, T1, from the thickness of the transfer prevention member 20 outside the image carrier. The thickness of the outer transfer prevention layer, T3, can be calculated as an average value such as 10-point mean.

The total thickness of the transfer prevention member and the image carrier needs to be, for example, 1 µm or more and 400 µm or less. With the total thickness of the transfer prevention member and the image carrier being equal to or more than the lower limit value, the functions as a transfer prevention member are reliably exerted. By employing a thickness equal to or less than the upper limit value, the image-carrying laminate is successfully prevented from having a thickness larger than necessary.

The total thickness of the transfer prevention member and the image carrier is preferably 1 µm or more and 200 µm or less, more preferably 2 µm or more and 100 µm or less, and further preferably 10 µm or more and 60 µm or less. With a thickness larger than a certain value, the transfer prevention member much more reliably exerts the functions as a transfer prevention member. By employing a thickness equal to or lower than the lower limit value, a proper thickness is successfully attained in forming by printing, as illustrated in Figs. 2 to 5.

Herein, the total thickness of the transfer prevention member and the image carrier is the thickness of the whole transfer prevention member including the image carrier in a region where the image carrier is provided, and, in the case that first and second transfer prevention layers are provided, it is equivalent to the total of the thickness of the first transfer prevention layer, T1, the thickness of the second transfer prevention layer, T2, and the thickness of the image carrier, T. In the case that only a first transfer prevention layer is provided, the total thickness is equivalent to the total of the thickness of the first transfer prevention layer, T1, and the thickness of the image carrier, T.

The thickness of the image-carrying laminate is not limited, and is, for example, 0.3 mm or more and 2 mm or less, preferably 0.4 mm or more and 1.5 mm or less, and more preferably 0.5 mm or 1.2 mmm or less. With a thickness equal to or less than the upper limit value, the image-carrying laminate does not have a thickness larger than necessary, and can be suitably applied even to interlayer films for laminated glass and the like. By employing a thickness equal to or more than the lower limit value, each layer can be provided with a proper thickness.

### <Layer Configuration>

The following describes layer configurations for the image-carrying laminate of the present invention in more detail with reference to the drawings. Fig. 1 illustrates an image-carrying laminate according to a first embodiment of the present invention.

An image-carrying laminate 10A according to the first embodiment includes an image carrier 15, a resin layer, and a transfer prevention member 20. In the image-carrying laminate 10A, the resin layer is composed of one layer, and the image-carrying laminate 10A includes a first resin layer 11 as the resin layer.

The transfer prevention member 20 is composed of a first transfer prevention layer 21. The first transfer prevention layer 21 is formed on one surface of the first resin layer 11. In the present embodiment, the first transfer prevention layer 21 is preferably a printed layer. As illustrated in Fig. 1, the first transfer prevention layer 21 is provided on a partial region of one surface of the first resin layer 11, and needs to have a larger size than the image carrier 15. In the present embodiment, however, the first transfer prevention layer 21 may be provided on the entire of one surface of the first resin layer 11.

The image carrier 15 is further formed on the first transfer prevention layer 21. The first transfer prevention layer 21 is positioned between the image carrier 15 and the first resin layer 11, and prevents materials constituting the image carrier 15 and the first resin layer 11 from transferring therebetween. The image carrier 15 is advantageously formed inside the outline of the first transfer prevention layer 21. The image carrier 15 is as described above, and more preferably a printed layer in the present embodiment. That is, both the image carrier 15 and the first transfer prevention layer 21 are preferably printed layers.

Although details on the first resin layer 11, image carrier 15, and first transfer prevention layer 21 in the present embodiment are as described above, it is preferable that the image carrier 15 be formed from an ultraviolet-curable ink and the first transfer prevention layer 21 be formed from a resin composition containing an ultraviolet-curable resin.

Fig. 2 illustrates an image-carrying laminate according to a second embodiment of the present invention. An image-carrying laminate 10B according to the second embodiment includes an image carrier 15, a resin layer, and a transfer prevention member 20. The second embodiment is the same as the first embodiment except that the transfer prevention member 20 is provided with a second transfer prevention layer 22 and an outer transfer prevention portion 23 in addition to the first transfer prevention layer 21, and description of members having the same configurations as in the first embodiment will be omitted.

On the image carrier 15 formed on the first transfer prevention layer 21, the second transfer prevention layer 22 is further formed. Provided with the second transfer prevention layer 22, the image-carrying laminate 10B of the present embodiment can prevent, for example, materials constituting the image carrier 15 from leaking from the opposite side to a surface where the first resin layer 11 is provided.

Accordingly, in the case that an additional resin layer is additionally superposed as described later on a surface which is opposite to a surface where the first resin layer 11 of the image-carrying laminate 10B is provided as described later, for example, then the second transfer prevention member 22 is positioned between the additional resin layer and the image carrier 15, and hence can prevent materials constituting the image carrier 15 and the additional resin layer from transferring therebetween.

The outer transfer prevention portion 23 is positioned outside the image carrier 15, and details thereon are as described above. In the present embodiment, the outer transfer prevention portion 23 is partially provided on one surface of the first resin layer 11 to fit with the region where the first transfer prevention layer 21 is provided, and as a result the transfer prevention member 21 is partially provided on one surface of the first resin layer 11.

In the present embodiment, all of the first transfer prevention layer 21, the second transfer prevention layer 22, and the outer transfer prevention portion 23 are more preferably printed layers. Accordingly, all of the image carrier 15, the first and second transfer prevention layers 21 and 22, and the outer transfer prevention portion 23 are further preferably printed layers.

In the present embodiment, the first and second transfer prevention layers 21 and 22 and the outer transfer prevention portion 23 advantageously integrally constitute the transfer prevention member 20, and this configuration allows the image carrier 15 to be enclosed in the transfer prevention member 20.

Fig. 3 illustrates an image-carrying laminate according to a third embodiment of the present invention. An image-carrying laminate 10C according to the third embodiment includes an image carrier 15, a resin layer, and a transfer prevention member 20, and includes a second resin layer 12 as the resin layer in addition to the first resin layer 11. The image carrier 15, the transfer prevention member 20, and the first resin layer 11 are the same as those in the second embodiment, and description thereof will be omitted.

The second resin layer 12 is provided on a surface of the image-carrying laminate 10C which is opposite to a surface where the first resin layer 11 is provided, and as a result the image carrier 15 and the transfer prevention member 20 are disposed between the first and second resin layers 11 and 12. Accordingly, the second transfer prevention layer 22 is positioned between the image carrier 15 and the second resin layer 12, and prevents materials constituting the image carrier 15 and the second resin layer 12 from transferring therebetween.

Here, the transfer prevention member 20 enclosing the image carrier 15 is provided partially on one surface of the first resin layer 11, and a partial region of one surface of the first resin layer 11 is provided neither with the image carrier 15 nor with the transfer prevention member 20.

Accordingly, as illustrated in Fig. 3, the first and second resin layers 11 and 12 are stacked partially through the transfer prevention member 20 enclosing the image carrier 15, and other parts thereof are stacked directly.

Fig. 4 illustrates an image-carrying laminate according to a fourth embodiment of the present invention.

An image-carrying laminate 10D according to the fourth embodiment includes an image carrier 15, a resin layer, and a transfer prevention member 20. Also in the present embodiment, as with the case of the second embodiment, the transfer prevention member 20 includes a first transfer prevention layer 21, a second transfer prevention layer 22, and an outer transfer prevention portion 23.

In the present embodiment, the first transfer prevention layer 21 is provided over the whole region of one surface of the first resin layer 11. That is, the first transfer prevention layer 21 is provided overall to the outer edge 11X of the first resin layer 11, and according to this the outer transfer prevention portion 23 is also provided overall to the outer edge 11X of the first resin layer 11. The other components are the same as those in the second embodiment, and hence description thereof will be omitted.

Fig. 5 illustrates an image-carrying laminate according to a fifth embodiment of the present invention. An image-carrying laminate 10E according to the fifth embodiment includes an image carrier 15, a resin layer, and a transfer prevention member 20, and includes a second resin layer 12 as the resin layer in addition to the first resin layer 11. The image carrier 15, the transfer prevention member 20, and the first resin layer 11 are the same as those in the fourth embodiment, and description thereof will be omitted.

The second resin layer 12 is provided on a surface of the image-carrying laminate 10E which is opposite to a surface where the first resin layer 11 is provided, and as a result the image carrier 15 and the transfer prevention member 20 are disposed between the first and second resin layers 11 and 12. A second transfer prevention layer 22 is positioned between the image carrier 15 and the second resin layer 12, and prevents materials constituting the image carrier 15 and the second resin layer 12 from transferring therebetween.

The transfer prevention member 20 enclosing the image carrier 15 is provided over the whole region of one surface of the first resin layer 11. Accordingly, the first and second resin layers 11 and 12 are stacked totally through the transfer prevention member 20 enclosing the image carrier 15 as illustrated in Fig. 5.

Fig. 6 illustrates an image-carrying laminate according to a sixth embodiment of the present invention.

An image-carrying laminate 10F according to the sixth embodiment includes an image carrier 15, a resin layer, and a transfer prevention member 20. Also in the present embodiment, as with the case of the third embodiment, the transfer prevention member 20 includes a first transfer prevention layer 21, a second transfer prevention layer 22, and an outer transfer prevention portion 23, and first and second resin layers 11 and 12 are provided as the resin layer; details on them are omitted.

It should be noted that in the present embodiment a thermoplastic resin is advantageously used as the resin in the first transfer prevention layer 21, and the first transfer prevention layer 21 is preferably formed by a lamination method. The first transfer prevention layer 21 is provided over the whole region of one surface of the first resin layer 11 overall to the outer edge 11X of the first resin layer 11.

On the other hand, the outer transfer prevention portion 23 is provided partially on one surface of the first transfer prevention layer 21, and there is a region where neither the second transfer prevention layer 22 nor the outer transfer prevention portion 23 is provided on the first transfer prevention layer 21.

Accordingly, in the present embodiment, a part of the second resin layer 12 is stacked directly on a part of the first transfer prevention layer 21. The residual part of the second resin layer 12 is advantageously stacked above the first transfer prevention layer 21 through the second transfer prevention layer 22 and the image carrier 15 or through the outer transfer prevention portion 23 without being stacked directly on the first transfer prevention layer 21.

While a mode in which the second resin layer 12 is provided is shown as the present embodiment, the second resin layer 12 does not need to be provided as with the case of the second and third embodiments. Even if the second resin layer is not provided, an additional resin layer is stacked on the opposite side to a surface of the image-carrying laminate 10F where the first resin layer 11 is provided in the subsequent process as described later, and as a result the second transfer prevention member 22 is positioned between the additional resin layer and the image carrier 15, and hence materials constituting the image carrier 15 and the additional resin layer can be prevented from transferring therebetween.

In Figs. 2 to 6, the transfer prevention member 20 is shown identically with respect to the level (i.e., the position of the top surface of the transfer prevention member 20 in Figs. 2 to 6) at both the position where the image carrier 15 is provided and the position where the outer transfer prevention portion 23 is provided. In the case that the outer transfer prevention portion 23 is formed through the same printing process as the second transfer prevention layer 22 is formed, however, the level at the position where the outer transfer prevention portion 23 is provided is advantageously lower than the level at the position where the second transfer prevention layer 22 is provided on the image carrier 15. This is because if the outer transfer prevention portion 23 and the second transfer prevention layer 22 are formed through the same printing process, then the thickness of the outer transfer prevention portion 23, T3, and the thickness of the second transfer prevention layer 22, T2, are almost the same, and as a result the level of the outer transfer prevention portion 23 is lower than the level of the second transfer prevention layer 22 by the thickness of the image carrier 15.

The above lamination structures are for describing embodiments of the image-carrying laminate, and the present invention is not limited to the lamination structures of the embodiments described above.

### <Method for Producing Image-carrying Laminate>

Although production of the image-carrying laminate of the present invention is not limited to a particular method, first, a first transfer prevention layer is advantageously formed on one surface of a first resin layer. Formation of the first transfer prevention layer is not limited to a particular method and as described above, and the first transfer prevention layer can be formed either by any of application methods including printing or by a lamination method. The first transfer prevention layer may be provided partially on one surface of the first resin layer or provided on the entire of one surface thereof.

Then, an image carrier is further formed on the first transfer prevention layer. The image carrier is preferably formed by means of printing, and details thereon are as described above. For example, the image-carrying laminate 10A according to the first embodiment (see Fig. 1) can be obtained by, as described, forming a first transfer prevention layer and image carrier on a first resin layer.

The image-carrying laminate of the present invention preferably includes a second transfer prevention layer and an outer transfer prevention portion in addition to the first resin layer, first transfer prevention layer, and image carrier described above. Accordingly, in the present production method, a second transfer prevention layer is preferably further formed on the image carrier that has been formed as described above, and an outer transfer prevention portion is more preferably further formed outside the image carrier in addition to the second transfer prevention layer.

The second transfer prevention layer and the outer transfer prevention portion are preferably formed by printing as described above. The second transfer prevention layer and the outer transfer prevention portion are more preferably formed through the same printing process. Accordingly, it is preferable to form the second transfer prevention layer on the image carrier and at the same time form the outer transfer prevention portion on the first transfer prevention layer by printing a resin composition or the like for forming the second transfer prevention layer and the outer transfer prevention portion on the region where the image carrier has been provided as well as on the region of the first transfer prevention layer where the image carrier has not been provided.

Through these processes, for example, the image-carrying laminate according to the second or fourth embodiment (Fig. 2, 4) can be obtained.

The image-carrying laminate of the present invention preferably further includes a second resin layer in addition to the first resin layer, first transfer prevention layer, image carrier, second transfer prevention layer, and outer transfer prevention portion described above. Accordingly, the present production method preferably includes forming a second resin layer. Specifically, a second resin layer is preferably further stacked on the second transfer prevention layer and outer transfer prevention portion formed as described above. By stacking the second resin layer, for example, the image-carrying laminate according to the third, fifth, or sixth embodiment can be obtained.

Stacking of the second resin layer is not limited to a particular method, and a known method can be employed; advantageously, a lamination method is employed. In the lamination method, the second resin layer may be formed by stacking a thermoplastic resin through extrusion molding on a surface of the laminate where the second transfer prevention layer and the outer transfer prevention portion have been formed. Alternatively, the second resin layer may be formed by processing a thermoplastic resin into a film in advance and stacking the film on a surface of the laminate through press molding or the like; otherwise, another known lamination method may be employed.

The surface of the laminate where the second transfer prevention layer and the outer transfer prevention portion have been formed may have unevenness caused by providing the image carrier, whereas, in stacking the second resin layer by the lamination method, the second resin layer follows the unevenness present in the surface of the laminate to come close contact with the surface of the laminate through stacking, and as a result the second resin layer is successfully stacked in a proper manner.

Accordingly, in the third embodiment (see Fig. 3), for example, the second resin layer 12 can be brought into close contact with the first resin layer 11, the outer transfer prevention portion 23, and the second transfer prevention layer 22 without any gap. In the sixth embodiment (see Fig. 6), for example, the second resin layer 12 can be brought into close contact with the first transfer prevention layer 21, the outer transfer prevention portion 23, and the second transfer prevention layer 22 without any gap. Moreover, also in the fifth embodiment (see Fig. 5), the second resin layer 12 can be brought into close contact with the second transfer prevention layer 22 and the outer transfer prevention portion 23 without any gap.

In the present production method, at least a part of the transfer prevention member and the image carrier are preferably formed by printing. Formation of the image carrier by printing enables easier representation of images of various shapes by the image carrier, making it easier to give image-carrying laminates with high design aesthetics. Formation of not only the image carrier but also at least a part of the transfer prevention member by printing makes it easier to process to give a desired shape to the transfer prevention member by processing to fit with the shape of the image carrier, further leading to efficient production of image-carrying laminates.

Examples of the printing performed for forming the transfer prevention member and the image carrier include, but are not limited to, screen printing, inkjet printing, flexographic printing, and offset printing; among them, screen printing and inkjet printing are preferred.

Printing techniques in forming the transfer prevention member and the image carrier may be the same or different. For example, both the transfer prevention member and the image carrier may be formed by screen printing or inkjet printing; alternatively, one of the transfer prevention member and the image carrier may be formed by screen printing with the other formed by inkjet printing.

Here, at least any one of the first transfer prevention layer, the second transfer prevention layer, and the outer transfer prevention portion in the transfer prevention member is preferably formed by printing, whereas, in the case that the second transfer prevention layer and the outer transfer prevention portion are omitted as shown for the first embodiment, the first transfer prevention layer needs to be formed by printing.

In the case that the first transfer prevention layer, the second transfer prevention layer, and the outer transfer prevention portion are provided as shown for the second to sixth embodiments, the first transfer prevention layer may be formed by printing, and the second transfer prevention layer and the outer transfer prevention portion may be formed by printing; however, at least the second transfer prevention layer and the outer transfer prevention portion are preferably formed by printing. Further preferably, all of the first transfer prevention layer, the second transfer prevention layer, and the outer transfer prevention portion are formed by printing.

The first transfer prevention layer is not formed by printing in some cases, and then the first transfer prevention layer can be formed by a lamination method as described above.

### <Usage of Image-carrying Laminate>

The image-carrying laminate of the present invention can be used for various applications, and preferably used as an adhesion sheet that is used by adhering the first resin layer or the first or second resin layer to a counterpart member. Here, the counterpart member to which the image-carrying laminate of the present invention is adhered is preferably a glass member. The glass member is preferably a glass sheet. Specific examples of the glass sheet are the same as those of glass sheets that are used for a laminated glass member described later.

### [Interlayer film for laminated glass]

The image-carrying laminate of the present invention is preferably used for an interlayer film for laminated glass. The image-carrying laminate of the present invention may be directly used as an interlayer film for laminated glass, or as an interlayer film for laminated glass with a resin layer (also referred to as an "additional resin layer") or the like stacked on the image-carrying laminate.

That is, the present invention provides an interlayer film for laminated glass including the image-carrying laminate, and the interlayer film for laminated glass may consist of the image-carrying laminate, or include another layer such as an additional resin layer in addition to the image-carrying laminate.

The configuration of the additional resin layer is the same as that of the resin layer described above, and hence description thereof will be omitted.

In the image-carrying laminate, the resin layer is advantageously used as an adhesion layer for adhering the resin layer to a counterpart member. Accordingly, in the case that the image-carrying laminate includes first and second resin layers as the resin layer, the image-carrying laminate may be used directly as an interlayer film for laminated glass. Specifically, two laminated glass members can be joined together via the image-carrying laminate by disposing the image-carrying laminate between a pair of laminated glass members and adhering the first resin layer to one laminated glass member and adhering the second resin layer to the other laminated glass member.

Even in the case that the image-carrying laminate includes first and second resin layers, a laminate obtained by stacking an additional resin layer on the image-carrying laminate may be appropriately used as an interlayer film for laminated glass. For example, a product obtained by stacking an additional resin layer further outside one or each of the first resin layer and the second resin layer may be used as an interlayer film for laminated glass.

In the case that the image-carrying laminate includes only one resin layer (first resin layer) as the resin layer, on the other hand, a laminate obtained by appropriately stacking an additional resin layer is preferably used as an interlayer film for laminated glass. In this case, the additional resin layer should be stacked on the opposite side to a surface of the image-carrying laminate where the first resin layer is provided. Specifically, the additional resin layer should be stacked on the image carrier 15 in the first embodiment (Fig. 1), and should be stacked on the second transfer prevention layer 22 in the second and fourth embodiments.

Even in the case that the image-carrying laminate includes only one resin layer (first resin layer) as the resin layer, the image-carrying laminate may be directly used as an interlayer film for laminated glass without stacking an additional resin layer. In this case, for example, a part of one surface of the first resin layer 11 needs to be exposed with the transfer prevention member 20 provided only on a part of one surface of the first resin layer 11 as shown for the first and second embodiments (Fig. 1, 2). With this mode, two laminated glass members can be properly joined together via the image-carrying laminate as an interlayer film for laminated glass by adhering one surface of the first resin layer 11 to one laminated glass member and adhering the other surface of the first resin layer 11 (i.e., a surface which is opposite to a surface where the transfer prevention member 20 is provided) to the other laminated glass member.

### [Laminated glass]

The laminated glass includes an interlayer film for laminated glass, and typically includes a pair of laminated glass members and an interlayer film for laminated glass disposed between the pair of laminated glass members with the pair of laminated glass members joined together via the interlayer film for laminated glass.

The interlayer film for laminated glass to be used for the laminated glass may consist of the image-carrying laminate as described above, or be a product obtained by stacking another layer such as an additional resin layer on the image-carrying laminate.

Glass sheets are advantageously used as the laminated glass members to be used for the laminated glass. Each glass sheet may be made of either inorganic glass or organic glass, but is preferably made of inorganic glass. Examples of the inorganic glass include, but are not limited to, clear glass, float plate glass, polished plate glass, patterned plate glass, figured and wired plate glass, wired plate glass, and green glass.

What is called resin glass is typically used as organic glass, and examples thereof include, but are not limited to, organic glass composed of resin such as polycarbonate, acrylic resin, acrylic copolymer resin, and polyester.

The two glass sheets may be composed of the same material or composed of different materials. For example, one may be made of inorganic glass with the other made of organic glass, but both of the two glass sheets are preferably made of inorganic glass or organic glass.

The thickness of each glass sheet is not limited, and, for example, about 0.1 to 15 mm, and preferably 0.5 to 5 mm. The thicknesses of the glass sheets may be the same or different, but are preferably the same.

Production of the laminated glass is not limited to a particular method. For example, the image-carrying laminate is sandwiched between two laminated glass members, and the resultant is passed through pressure rolls or subjected to vacuum suction in a rubber bag to exclude the air remaining between the two glass members and the resin film. Thereafter, the resultant is pre-adhered at approximately 70 to 110°C, giving a laminate. Next, the laminate is pressure-bonded at approximately 120 to 150°C and a pressure of 1 to 1.5 MPa in an autoclave or by pressing. In this way, the laminated glass is successfully given.

In the case that another resin layer such as an additional resin layer is stacked on the image-carrying laminate for the laminated glass, the laminated glass may be produced by the above method with an integrated product, which has been obtained in advance by stacking another layer such as an additional resin layer on the image-carrying laminate, sandwiched between two laminated glass members.

In the case that another layer such as an additional resin layer is stacked on the image-carrying laminate, the laminated glass may be produced by the above method with a stacked product of the image-carrying laminate and another resin layer, without preliminary integration, sandwiched between two laminated glass members. In this case, an interlayer film for laminated glass in which another layer is stacked on the image-carrying laminate is produced simultaneously with production of the laminated glass.

The interlayer film of the present invention for laminated glass and the laminated glass of the present invention can be used for glass structures such as window panes in various fields, and applicable to transport applications such as automobiles, train cars, aircrafts, and ships, construction applications, and so on, and preferably used for vehicle applications including automobile applications, especially. In using for automobile applications, the interlayer film of the present invention for laminated glass and the laminated glass of the present invention can be used for any of front glass, side glass, and rear glass windows.

Being capable of allowing glass structures to carry images, the interlayer film of the present invention for laminated glass and the laminated glass of the present invention are preferably used for applications that require high design aesthetics. When used for a window pane for automobiles, for example, the interlayer film of the present invention for laminated glass and the laminated glass of the present invention allows decoration of the window pane for automobiles to fit with body design and body color. Also in construction applications, the interlayer film of the present invention for laminated glass and the laminated glass of the present invention are preferably used for decorative glass for exteriors or interiors.

In the case that the image carrier contains a luminescent material as described above, the laminated glass is preferably used together with a light source device that irradiates with excitation light. The light source device is not limited, and in using the laminated glass for a vehicle application, for example, the light source device is preferably disposed inside a vehicle. In using for a construction application, the light source device may be disposed inside a building or outside a building.

### Examples

The present invention will be described in more detail with Examples, but the present invention is not limited by those examples at all.

### [Example 1]

### (Formation of image-carrying laminate)

First, resin films each consisting of 100 parts by mass of PVB (polyvinylbutyral resin, average degree of polymerization: 1700, hydroxyl content: 30.5 mol%, degree of acetylation: 1 mol%, degree of acetalization: 68.5 mol%) and 30 parts by mass of a plasticizer (3GO: triethylene glycol-di-2-ethylhexanoate) were prepared as first and second resin layers.

A resin composition containing 2-hydroxypropyl methacrylate was applied onto the entire of one surface of the resin film prepared for a first resin layer in a solid manner by inkjet printing, and irradiated with an ultraviolet ray at 3 W/cm² to cure the resin composition, forming a first transfer prevention layer. Next, ultraviolet-curable ink containing diethyl diethyl-2,5-dihydroxyterephthalate as dye and a polyfunctional acrylate compound as binder resin was applied onto the first transfer prevention layer to give a specific image shape by inkjet printing, and irradiated with an ultraviolet ray at 3 W/cm² to cure the ink, forming an image carrier. The image had a shape with five lines of 130 mm in length placed at 10-mm intervals, and the lines had widths of 0.1 mm, 1 mm, 3 mm, 5 mm, and 10 mm, respectively. Subsequently, a resin composition containing 2-hydroxypropyl methacrylate was further applied onto the image carrier in a solid manner by inkjet printing, and irradiated with an ultraviolet ray at 3 W/cm² to cure the resin composition, forming a second transfer prevention layer on the image carrier and simultaneously forming an outer transfer prevention portion outside the image carrier.

Thereafter, the rein film for a second resin layer was stacked on the second transfer prevention layer and outer transfer prevention portion by a method of lamination; thus, an image-carrying laminate having the structure illustrated in Fig. 5 and a thickness of 0.8 mm was obtained.

### (Formation of laminated glass)

The image-carrying laminate obtained (interlayer film for laminated glass) was sandwiched between two sheets of clear glass (15 cm in length × 15 cm in width × 2.5 mm in thickness) to give a laminate. This laminate was placed in a rubber bag, degassed at a degree of vacuum of 2.6 kPa for 20 minutes, then transferred into an oven in the degassed state, and further held at 90°C for 30 minutes and vacuum-pressed to temporarily pressure-bond the laminate. The laminate temporarily pressure-bonded was pressure-bonded in an autoclave at 135°C and a pressure of 1.2 MPa for 20 minutes, giving laminated glass.

### [Example 2]

Operations were performed in the same manner as in Example 1 except that screen printing was used in place of inkjet printing for forming the transfer prevention member (first and second transfer prevention layers, and outer transfer prevention portion).

### [Example 3]

Operations were performed in the same manner as in Example 1 except that terephthalate material 2a described in the article Angew. Chem., Int. Ed., 2017, 56, 12543-12547 was used as the dye for the ultraviolet-curable ink.

### [Example 4]

Operations were performed in the same manner as in Example 1 except that terephthalate material 5 described in the article Chemistry A European Journal, 2019, 25, 16732-16739 was used as the dye for the ultraviolet-curable ink.

### [Example 5]

Operations were performed in the same manner as in Example 1 except that 2-hydroxyethyl methacrylate was used instead of the compound 2-hydroxypropyl methacrylate as the material for the transfer prevention member (first and second transfer prevention layers, and outer transfer prevention portion).

### [Comparative Examples 1 to 3]

Operations were performed in the same manner as Example 1, 2, or 4 except that the formation of the transfer prevention member (first and second transfer prevention layers, and outer transfer prevention portion) was omitted.

### (Evaluation)

The image carrier of each of the sheets of laminated glass obtained in Examples and Comparative Examples was irradiated with light having a wavelength of 405 nm and an intensity of 10 mW/cm² from an LED ("NS-3SLG" manufactured by Nitride Semiconductors Co., Ltd.), and the emitting image carrier was observed to evaluate the initial appearance on the basis of criteria shown below. Separately, the sheets of laminated glass produced were left to stand in a thermostatic chamber set to 100°C for 14 days. After the leaving, the sheets of laminated glass were taken out of the thermostatic chamber, and each was observed in the same manner as described to evaluate the after-appearance on the basis of criteria shown below. The evaluation results are shown in Table 1.

### (Evaluation criteria)

OK: Almost no image blur was found, and the five lines in the image carrier were visually observed clearly.

NG: Image blur was found, and the five lines in the image carrier looked blurry with at least one of the lines looked overlapping another line.

**[Table 1]**

| | | Example 1 | Example 2 | Example 3 | Example 4 | Example 5 | Comparative Example 1 | Comparative Example 2 | Comparative Example 3 |
|---|---|---|---|---|---|---|---|---|---|
| First resin layer | Resin | PVB | PVB | PVB | PVB | PVB | PVB | PVB | PVB |
| | Plasticizer | 3GO | 3GO | 3GO | 3GO | 3GO | 3GO | 3GO | 3GO |
| | Formulation (resin/ plasticizer), part by mass | 100/40 | 100/40 | 100/40 | 100/40 | 100/40 | 100/40 | 100/40 | 100/40 |
| | Thickness | 400 µm | 400 µm | 400 µm | 400 µm | 400 µm | 400 µm | 400 µm | 400 µm |
| First transfer prevention layer | Material | acrylate-based | acrylate-based | acrylate-based | acrylate-based | acrylate-based | none | none | none |
| | Formation method | inkjet printing | screen printing | inkjet printing | inkjet printing | inkjet printing | | - | - |
| | Thickness | 20 µm | 20 µm | 20 µm | 20 µm | 20 µm | 0 µm | 0 µm | 0 µm |
| Image carrier | Dye | terephthalate skeleton | terephthalate skeleton | terephthalate skeleton | terephthalate skeleton | terephthalate skeleton | terephthalate skeleton | terephthalate skeleton | terephthalate skeleton |
| | Formation method | inkjet printing | inkjet printing | inkjet printing | inkjet printing | inkjet printing | inkjet printing | inkjet printing | inkjet printing |
| | Thickness | 10 µm | 10 µm | 10 µm | 10 µm | 10 µm | 10 µm | 10 µm | 10 µm |
| Second transfer prevention layer | Material | acrylate-based | acrylate-based | acrylate-based | acrylate-based | acrylate-based | none | none | none |
| | Formation method | inkjet printing | screen printing | inkjet printing | inkjet printing | inkjet printing | - | - | - |
| | Thickness | 20 µm | 20 µm | 20 µm | 20 µm | 20 µm | 0 µm | 0 µm | 0 µm |
| Second resin layer | Resin | PVB | PVB | PVB | PVB | PVB | PVB | PVB | PVB |
| | Plasticizer | 3GO | 3GO | 3GO | 3GO | 3GO | 3GO | 3GO | 3GO |
| | Formulation (resin/ plasticizer), part by mass | 100/40 | 100/40 | 100/40 | 100/40 | 100/40 | 100/40 | 100/40 | 100/40 |
| | Thickness | 400 µm | 400 µm | 400 µm | 400 µm | 400 µm | 400 µm | 400 µm | 400 µm |
| Evaluation | Initial appearance | OK | OK | OK | OK | OK | OK | OK | OK |
| | After-appearance | OK | OK | OK | OK | OK | NG | NG | NG |

In each of Examples above, the transfer prevention layers provided between the resin layers and the image carrier prevented materials constituting the image carrier from transferring to the resin layers and prevented materials constituting the resin layers from transferring to the image carrier, and as a result almost no leak-out of the dye from the image carrier occurred even through the facilitated degradation, and the image carrier successfully maintained good image quality.

In each of Comparative Example, in contrast to that, no transfer prevention layer was provided, and as a result the dye in the image carrier leaked out of the image carrier through the facilitated degradation, and the image carrier failed to maintain good image quality.

10A to 10F image-carrying laminate
**11** first resin layer
12 second resin layer
15 image carrier
20 transfer prevention member
21 first transfer prevention layer
22 second transfer prevention layer
23 outer transfer prevention portion

## Claims

1. An image-carrying laminate for carrying an image, comprising an image carrier, a first resin layer and a transfer prevention member,
the transfer prevention member comprising a first transfer prevention layer that is positioned between the image carrier and the first resin layer and that prevents materials constituting the image carrier and the first resin layer from transferring therebetween.

2. The image-carrying laminate according to claim 1, wherein the transfer prevention member comprises a second transfer prevention layer positioned on a surface of the image carrier which is opposite to a surface where the first transfer prevention layer is provided, and an outer transfer prevention portion positioned outside the image carrier.

3. The image-carrying laminate according to claim 2, further comprising a second resin layer,
wherein the second transfer prevention layer is positioned between the image carrier and the second resin layer, and
the first resin layer and the second resin layer are stacked through the transfer prevention member, and the image carrier is enclosed in the transfer prevention member.

4. The image-carrying laminate according to claim 2, further comprising a second resin layer,
wherein the second transfer prevention layer is positioned between the image carrier and the second resin layer, and
the first resin layer and the second resin layer are stacked through the transfer prevention member partially, and other parts thereof are stacked directly.

5. The image-carrying laminate according to claim 2, further comprising a second resin layer,
wherein the second transfer prevention layer is positioned between the image carrier and the second resin layer, and
a part of the second resin layer is directly stacked on a part of the first transfer prevention layer.

6. The image-carrying laminate according to claim 1, wherein the image carrier is formed from an ink comprising a dye.

7. The image-carrying laminate according to claim 6, wherein the dye is a compound containing a terephthalate skeleton.

8. The image-carrying laminate according to claim 6, wherein the transfer prevention member substantially contains no dye.

9. The image-carrying laminate according to claim 1, wherein a total thickness of the transfer prevention member and the image carrier is 1 µm or more and 200 µm or less.

10. The image-carrying laminate according to claim 1, wherein a thickness ratio of the first transfer prevention layer and the image carrier is 1:200 to 200:1.

11. The image-carrying laminate according to claim 1, wherein the transfer prevention member is a cured product of a resin composition comprising an acrylate compound.

12. An interlayer film for laminated glass, comprising the image-carrying laminate according to any one of claims 1 to 11.

13. A laminated glass comprising the interlayer film for laminated glass according to claim 12.

14. A method of producing the image-carrying laminate according to any one of claims 1 to 11, comprising forming at least a part of the transfer prevention member, and the image carrier by printing.

15. The method of producing the image-carrying laminate according to claim 14, wherein the printing is at least any one of inkjet printing and screen printing.
